# EUROPEAN PATENT APPLICATION

(11) **EP 4 523 976 A1**
(43) Date of publication of application: **19.03.2025**
(21) Application number: 24192005.7
(22) Date of filing: 31.07.2024
(51) Int. Cl.: B60R 19/12, B60R 19/48, B62D 25/08

(54) **VEHICLE STRUCTURE**

(30) Priority: 15.09.2023 JP 2023150380
(71) Applicant: Suzuki Motor Corporation, Shizuoka 432-8611 (JP)
(72) Inventor: SAITO, Kazumasa, Hamamatsu-shi, 431-0201 (JP); SUZUKI, Kazuma, Hamamatsu-shi, 431-0201 (JP)
(74) Representative: Plasseraud IP

(57) **Abstract**

[Problem to be Solved]

To provide a vehicle structure having a sensor device attachment structure that can improve the sensing accuracy of a sensor device.

[Solution]

A vehicle structure 1 includes a cross member 43 forming a part of a vehicle body structure member 40 of a vehicle and extending in the vehicle width direction, an outer panel 10 supported by the cross member 43 and forming a design surface outside the vehicle, a reinforcement member 30 reinforcing the outer panel 10 from its back surface 10e side, and a sensor device S attached to the reinforcement member 30 and sensing the environment outside the vehicle. The reinforcement member 30 includes a vehicle body coupling portion 31 coupled to the cross member 43 and a panel coupling portion 32 coupled to the outer panel 10. The panel coupling portion 32 includes a peripheral coupling portion 32a that is coupled to a predetermined position of a peripheral region 10f surrounding a region 10d3 of the outer panel 10 opposite a sensor main body S1 of the sensor device S.

## Description

### [Technical Field]

The present invention relates to a vehicle structure that includes a structure for arranging a sensor device for sensing the environment outside the vehicle in an outer panel.

### [Background Art]

In general, outer panels such as a bumper and a grille that form design surfaces on the outside of a vehicle are provided at the front and rear of a vehicle such as an automobile. In some cases, a sensor device that senses the environment outside the vehicle is provided on the back surface of the outer panel or the like. Examples of the sensor device include radar that uses electromagnetic waves such as millimeter waves and microwaves as sensor waves, sonar sensors (ultrasonic sensors/sonar) that use sound waves such as ultrasonic waves as sensor waves, and cameras (imaging devices) that sense the environment outside the vehicle through imaging. A region of the outer panel opposite the sensor device is formed as a sensor wave passage portion made of, in the case of radar, a material that allows electromagnetic waves to pass through. Then, to increase sensing (detection) accuracy, high accuracy is required for the relative positional relationship (relative distance and relative angle) between the sensor wave passage portion of the outer panel and the sensor device. In addition, a certain level of accuracy is also required for the relative positional relationship (relative angle or the like) between the vehicle body and the sensor device.

A structure disclosed in Patent Literature 1 is known as an example of a vehicle structure having a structure for arranging a sensor device in an outer panel. In this structure, a radar antenna is attached to a frame member that reinforces a front grille panel member from the back, and the front grille is locked or fastened to a vehicle body-side member.

### [Citation List]

### [Patent Literature]

[Patent Literature 1] JP 2021-059268 A

### [Summary of Invention]

### [Problem to be Solved by the Invention]

Incidentally, in the structure disclosed in Patent Literature 1, the frame member to which the radar antenna is attached is bonded and fixed to the back surface of the front grille. Accordingly, for example, during assembly, the only way to set the relative positional relationship between the front grille sensor wave passage portion and the radar antenna within the required accuracy is to fine-tune the attachment between the radar antenna and the frame member. Then, even if the relative positional relationship between the sensor wave passage portion and the radar antenna can be set within the required accuracy level, the relative angle (vehicle mounting angle) of the radar antenna relative to the vehicle body may deviate significantly from the ideal angle and decrease the sensing (detection) accuracy, depending on the state of attachment (locking or fastening) of the front grille to the vehicle body.

In view of the foregoing, an objective of the present invention is to provide a vehicle structure having a sensor device attachment structure that can improve the sensing accuracy of a sensor device.

### [Means for Solving the Problem]

In order to achieve the above objective, one aspect of the present invention provides a vehicle structure including: a cross member forming a part of a vehicle body structure member of a vehicle and extending in a vehicle width direction; an outer panel supported by the cross member and forming a design surface outside the vehicle; a reinforcement member reinforcing the outer panel from a back surface side of the outer panel; and a sensor device attached to the reinforcement member and sensing an environment outside the vehicle. The vehicle structure is characterized in that the reinforcement member includes a vehicle body coupling portion coupled to the cross member and a panel coupling portion coupled to the outer panel, and the panel coupling portion includes a peripheral coupling portion that is coupled to a predetermined position of a peripheral region surrounding a region of the outer panel opposite a sensor main body of the sensor device.

### [Advantageous Effect of Invention]

According to an aspect of the present invention, it is possible to provide a vehicle structure having a sensor device attachment structure that can improve the sensing accuracy of a sensor device.

### [Brief Description of Drawings]

[Figure 1] Figure 1 is a perspective view of a vehicle structure according to an embodiment of the present invention.
[Figure 2] Figure 2 is an exploded perspective view of the vehicle structure.
[Figure 3] Figure 3 is a front view of the vehicle structure from which an outer panel is removed.
[Figure 4] Figure 4 is a back view of the vehicle structure from which the outer panel and a lamp device are removed.
[Figure 5] Figure 5 is an enlarged partial view of a back surface of the outer panel.
[Figure 6] Figure 6 is an enlarged partial plan view of the vehicle structure as viewed from the back surface side.
[Figure 7] Figure 7 is an enlarged partial perspective view of the vehicle structure as viewed from the back surface side.
[Figure 8] Figure 8 is an enlarged perspective view of part A shown in Figure 5.
[Figure 9] Figure 9 is an enlarged perspective view of part B shown in Figure 7.
[Figure 10] Figure 10 is a diagram for describing coupling positions of elements in the vehicle structure.

### [Mode for Carrying Out the Invention]

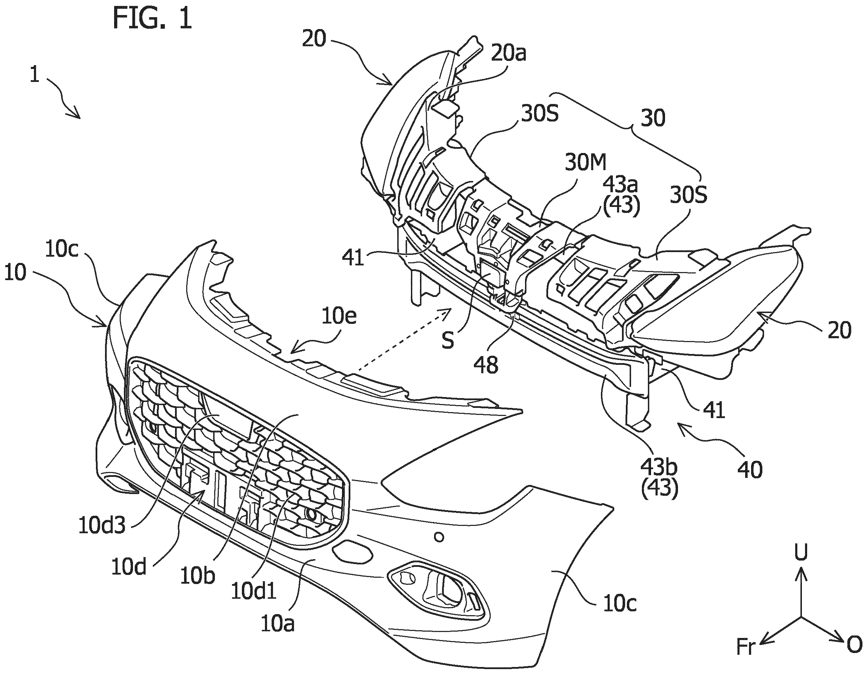

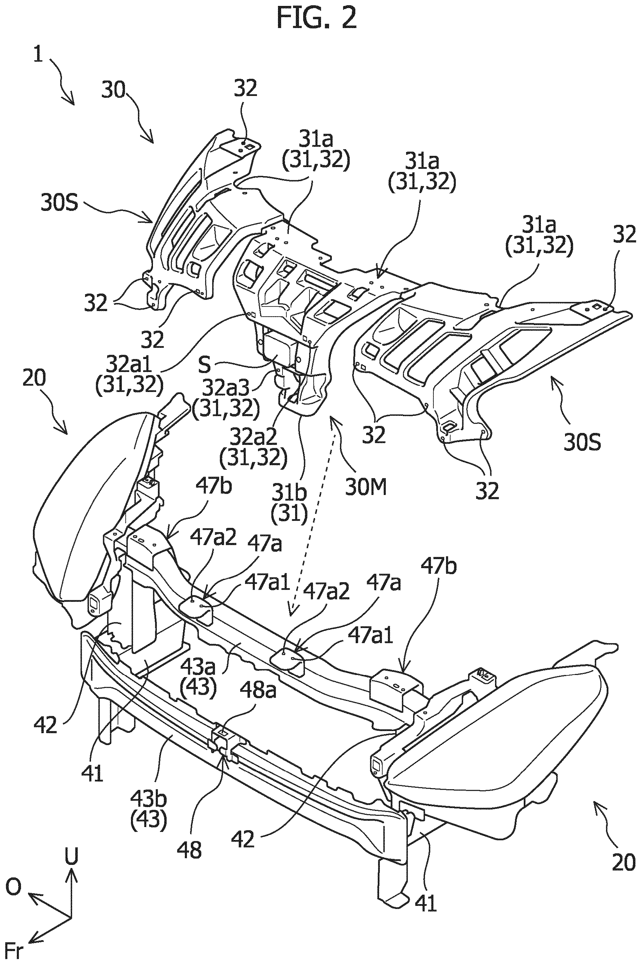

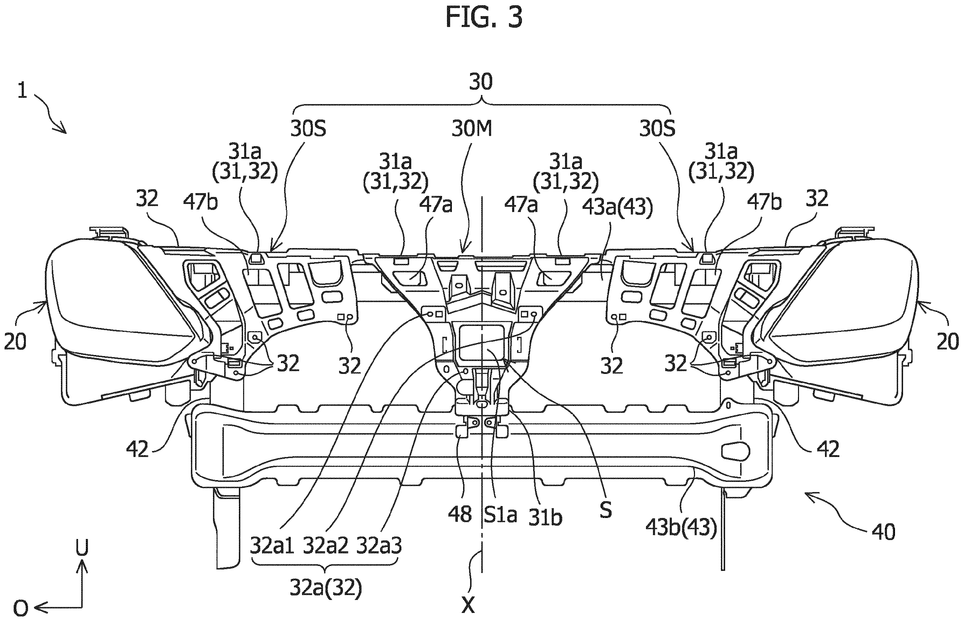

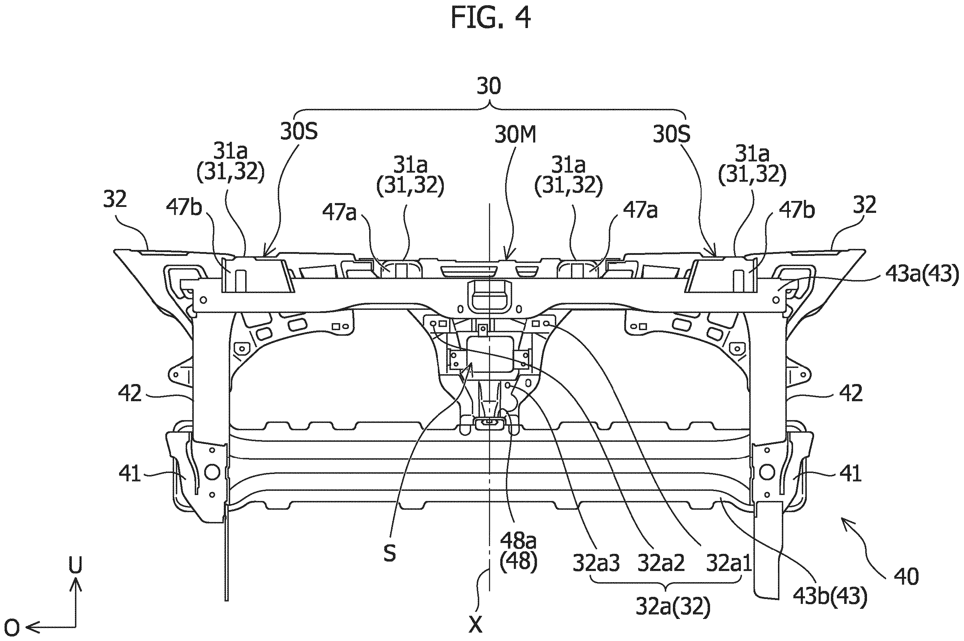

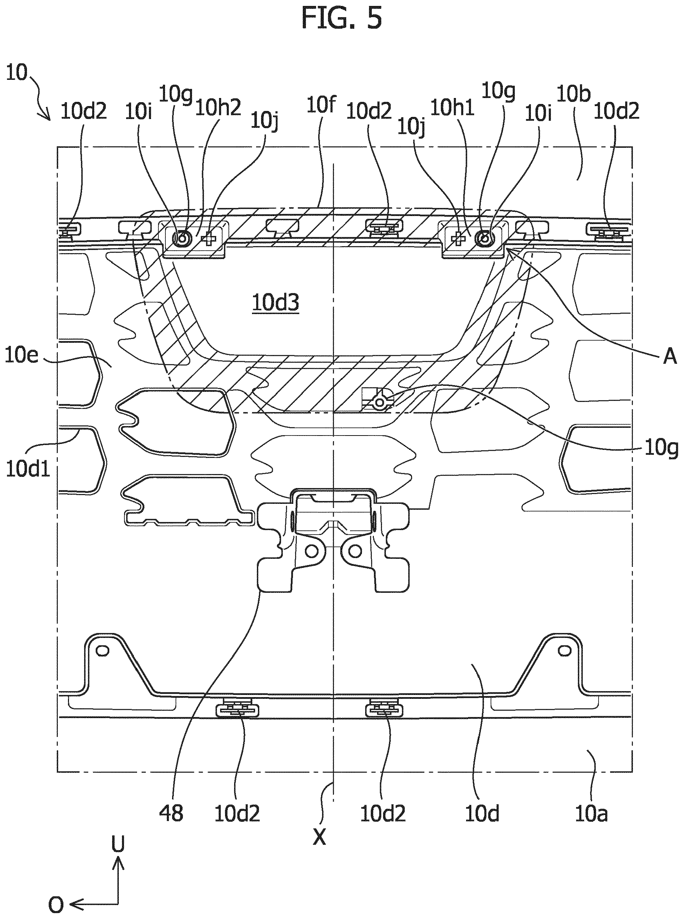

Hereinafter, an embodiment of the present invention will be described with reference to the accompanying drawings. Figures 1 to 5 are diagrams for describing a vehicle structure 1 according to an embodiment of the present invention. Figure 1 is a perspective view of the vehicle structure 1 as viewed from the vehicle front, Figure 2 is an exploded perspective view of the vehicle structure 1, Figure 3 is a front view, Figure 4 is a back view, and Figure 5 is an enlarged partial view of the back surface of an outer panel 10 described later. Note that the outer panel 10 described later is removed in Figures 3 and 4, and a lamp device 20 described later is removed in Figure 4. In the drawings, an arrow Fr direction indicates the vehicle front in the longitudinal direction of the vehicle, an arrow O direction indicates the outside (outside in vehicle width direction) of the vehicle in the vehicle width direction (vehicle width direction), and an arrow U direction indicates the upper side of the vehicle in the vertical direction of the vehicle. In the following description, "front" and "rear" correspond to the front and rear in the longitudinal direction of the vehicle, and "up" and "down" correspond to up and down in the vertical direction of the vehicle. In addition, "left" and "right" correspond to left and right in the vehicle width direction when viewed from the front side of the vehicle toward the rear side of the vehicle.

### (Summary of vehicle structure)

As illustrated in Figures 1 to 4, the vehicle structure 1 is a structure that includes a panel attachment structure for attaching (fixing) the outer panel 10 of the vehicle to the vehicle body side. In the present embodiment, the vehicle structure 1 is applied as a vehicle front structure. In the vehicle structure 1, at the front of the vehicle, each of a pair of lamp devices 20, 20, which are separated from each other in the vehicle width direction, are arranged adjacent to the outer panel 10.

In the present embodiment, the vehicle structure 1 includes the outer panel 10, the lamp device 20, a reinforcement member 30, a sensor device S, and a vehicle body structure member 40. The vehicle structure 1 is symmetrical in the vehicle width direction. Hereinafter, the left structure of the vehicle structure 1 will mainly be described, and the description of the right structure will be omitted or simplified.

The outer panel 10 is a member that forms a design surface on the outside of the vehicle and extends in the vehicle width direction. In the present embodiment, the outer panel 10 is a front bumper that forms a design surface at the front of the vehicle. In the illustrated example, the outer panel 10 as the front bumper has a bumper front surface portion 10a extending over the entire vehicle width direction, a bumper inclined surface portion 10b extending upward toward the rear in an inclined manner to a front portion of a front hood (not illustrated) from an upper portion of the bumper front surface portion 10a, and bumper side surface portions 10c extending rearward from both end portions in the vehicle width direction of the bumper front surface portion 10a. A large bumper opening is opened at the center of the bumper front surface portion 10a. The outer panel 10 has a resin front grille 10d that closes the bumper opening.

With reference to Figure 5, the front grille 10d is provided with a plurality of opened vent holes 10d1, and the front grille 10d is an intake member in the illustrated example. Grille claws 10d2 protruding rearward are formed at the peripheral edge of the front grille 10d. The grille claw 10d2 is inserted into and locked to a coupling hole formed at the peripheral edge of the bumper opening of the outer panel 10.

In the present embodiment, the lamp device 20 is a front lamp (also referred to as a headlight) that mainly illuminates a region at the front of the vehicle. The lamp device 20 is provided on each of the left and right at the vehicle front.

The reinforcement member 30 is a member for reinforcing the outer panel 10 from its back surface 10e side and fixing the outer panel 10 to the vehicle body (vehicle body structure member 40), and is the main element of the panel attachment structure. The outer panel 10 is a large panel that is thin and spreads in a wide range in the vehicle width direction, and therefore its rigidity is relatively low. In order to reinforce the low-rigidity outer panel 10, the reinforcement member 30 supports the outer panel 10 at a plurality of locations from the back surface 10e of the outer panel 10. As described later, the reinforcement member 30 is coupled to and supported by the vehicle body (vehicle body structure member 40) at a plurality of locations via a bracket. The reinforcement member 30 supports the outer panel 10 by being coupled to the back surface 10e of the outer panel 10 at a plurality of locations. In other words, the outer panel 10 is supported by the vehicle body (cross member 43 described later in the present embodiment) via the reinforcement member 30 and the bracket, and fixed to the vehicle body. Note that the structure of the reinforcement member 30 will be described later.

The vehicle body structure member 40 is a highly rigid member forming a structure member of the vehicle body. At the vehicle front, a pair of front side members 41, 41, a pair of vertical braces 42, 42, the cross member 43 extending in the vehicle width direction, and the like are provided as the vehicle body structure member 40. That is, each element (41, 42, 43) forms a part of the vehicle body structure member 40 of the vehicle.

The cross member 43 has a first cross member 43a and a second cross member 43b separated from each other in the vertical direction of the vehicle. Specifically, the pair of front side members 41, 41 are separated from each other in the vehicle width direction below the vehicle, and each front side member 41 extends in the longitudinal direction. Each vertical brace 42 is joined to an upper surface of the front side member 41 and extends upward. The first cross member 43a and the second cross member 43b are separated from each other in the vertical direction of the vehicle, and each cross member 43a, 43b extends in the vehicle width direction.

In the present embodiment, the first cross member 43a is located above the second cross member 43b in the vertical direction of the vehicle, and can be referred to as an upper cross member or an upper bumper beam. One end of the first cross member 43a is joined to the upper end of one vertical brace 42, and the other end of the first cross member 43a is joined to the upper end of the other vertical brace 42. One end of the second cross member 43b (also referred to as lower cross member or lower bumper beam) is joined to the front end of one front side member 41, and the other end of the second cross member 43b is joined to the front end of the other front side member 41.

The sensor device S is a device that is attached to the reinforcement member 30 to sense the environment outside the vehicle. In the present embodiment, the sensor device S is a device that senses an obstacle (obstacle outside vehicle) such as another vehicle located at the front of the vehicle using electromagnetic waves. In the present embodiment, the sensor device S uses millimeter waves as electromagnetic waves. That is, the sensor device S is a millimeter wave radar. Note, however, that the electromagnetic waves used by the sensor device S are not limited to millimeter waves, and they may be microwaves, for example.

The sensor device S has a sensor main body S1 that outputs and receives sensor waves, and a sensor bracket S2 that supports the sensor main body S1. In the illustrated example, the sensor main body S1 has a rectangular outer shape and is arranged with its sensor front surface S1a facing the vehicle front. The sensor bracket S2 is made of a metal plate material. The sensor bracket S2 has a back plate S21 that is rectangular in back view and is fixed to the back of the sensor main body S1 with rivets or bolts, an upper flange S22 extending from the middle in the vehicle width direction of the upper edge of the back plate S21, a right flange S23 extending from the right edge of the back plate S21, and a left flange S24 extending from the left edge of the back plate S21.

In the illustrated example, at the back of the front grille 10d, the sensor device S is attached to the center in the vehicle width direction and the center in the vertical direction of the vehicle in the reinforcement member 30 with the sensor front surface S1a facing the vehicle front with coupling tools such as bolts, and is fixed to the reinforcement member 30. In this state, the sensor device S is spaced apart from the back surface 10e of the outer panel 10 (front grille 10d in illustrated example) and is opposed to the back surface 10e. A region 10d3 (part) of the outer panel 10 (front grille 10d) opposite the sensor main body S1 of the sensor device S is made of a material (e.g. synthetic resin or the like) having characteristics that allow electromagnetic waves to pass through, and is formed as a flat plate as a sensor wave passage region (electromagnetic wave passage portion). Hereinafter, the region 10d3 is referred to as a sensor wave passage region 10d3 as appropriate.

The sensor device S outputs electromagnetic waves, and the output electromagnetic waves pass the sensor wave passage region 10d3 of the front grille 10d and are output to the vehicle front. Then, in a case in which there is an obstacle at the vehicle front, the electromagnetic waves output to the vehicle front are reflected by the obstacle. The sensor device S receives the electromagnetic waves reflected by the obstacle and that passes the sensor wave passage region 10d3 to sense the obstacle at the vehicle front.

### (Detail of vehicle structure)

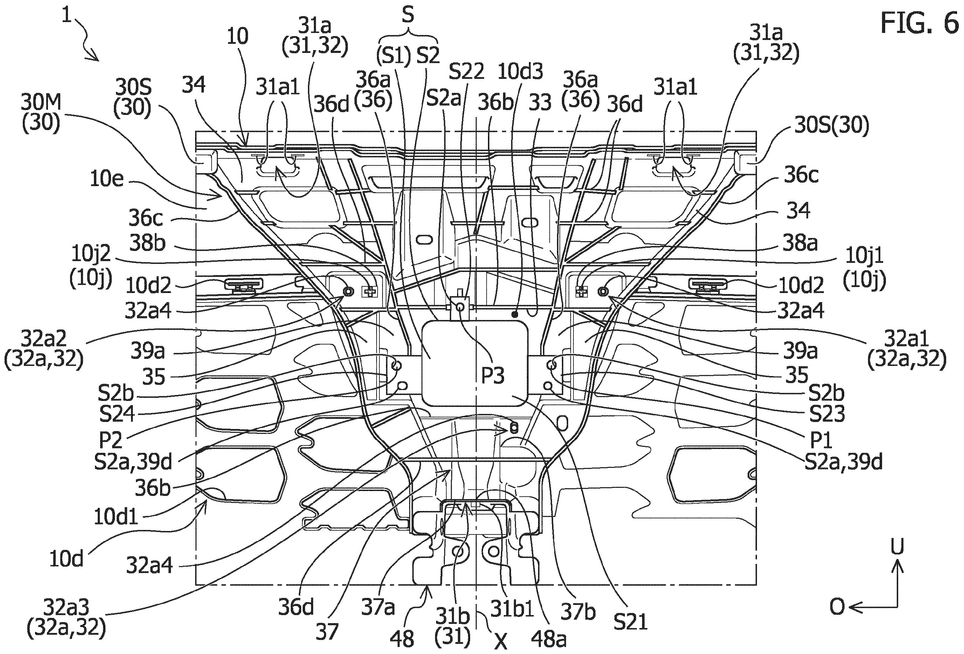

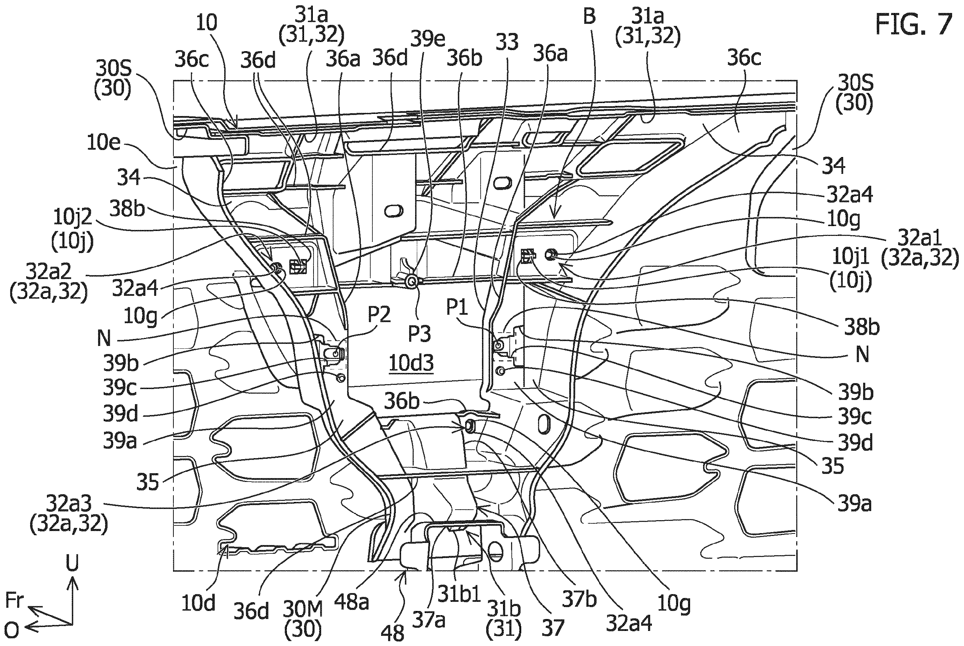

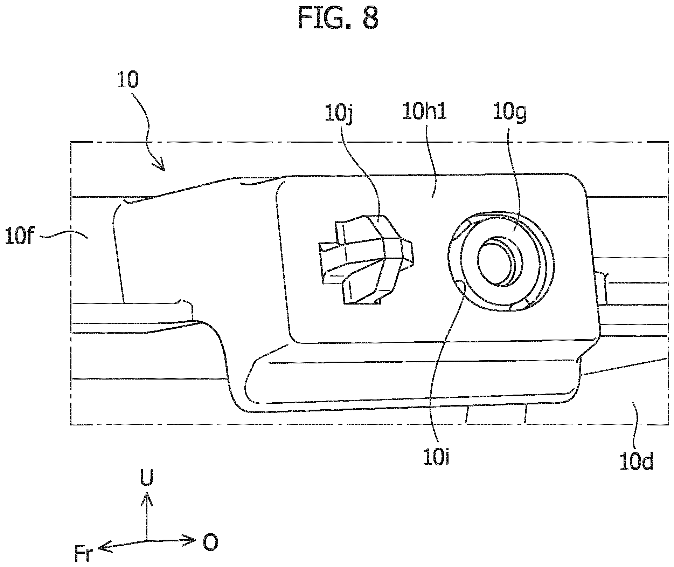

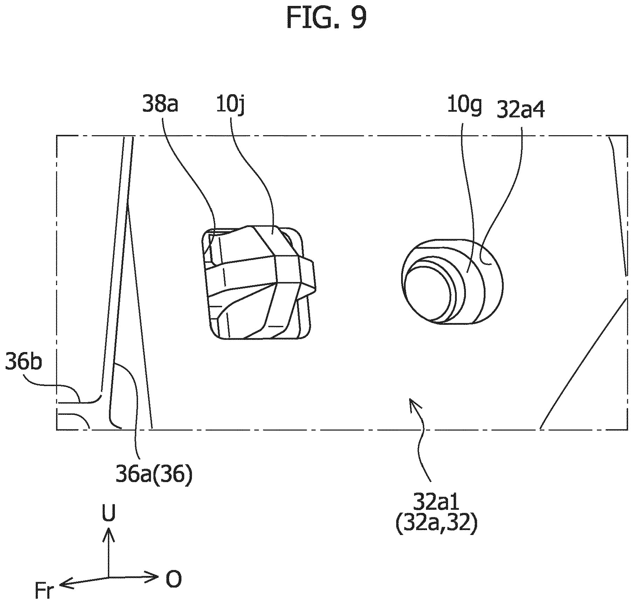

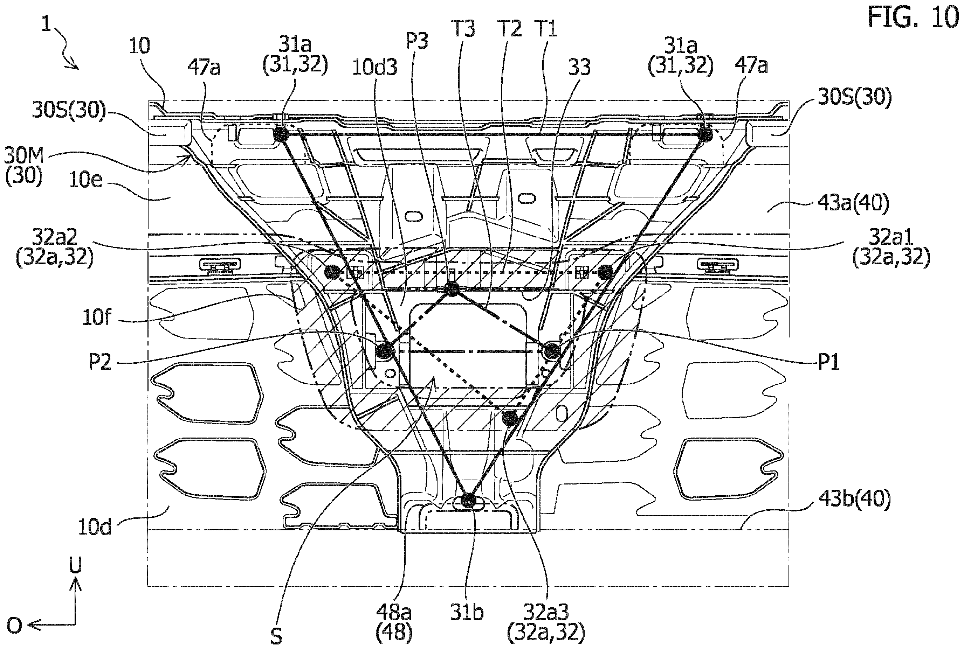

Hereinafter, the vehicle structure 1 will be described in detail with reference to Figures 1 to 10. Figure 5 is an enlarged partial view of the back surface 10e of the outer panel 10, Figure 6 is an enlarged partial plan view of the vehicle structure 1 as viewed from the back surface 10e side of the outer panel 10, and Figure 7 is an enlarged partial perspective view of the vehicle structure 1 as viewed from the back surface 10e side of the outer panel 10. Note, however, that the first cross member 43a and the second cross member 43b are omitted from Figures 6 and 7. Figure 8 is an enlarged perspective view of part A shown in Figure 5, and Figure 9 is an enlarged perspective view of part B shown in Figure 7. Figure 10 is a diagram for describing coupling positions of elements in the vehicle structure 1.

With reference to Figures 1 to 4, the reinforcement member 30 functions as a bumper holder that supports the front bumper as the outer panel 10 from its back surface 10e side, and also functions as a sensor holder that holds the sensor device S. Then, the reinforcement member 30 extends in the vehicle width direction between the pair of lamp devices 20, 20. The reinforcement member 30 is a resin injection-molded product, for example. The reinforcement member 30 is formed so as to extend in the vehicle width direction generally along the bumper front surface portion 10a and the bumper inclined surface portion 10b on the back surface 10e of the outer panel 10.

The reinforcement member 30 has a vehicle body coupling portion 31 coupled to the cross member 43, and a panel coupling portion 32 coupled to the outer panel 10. The vehicle body coupling portion 31 and the panel coupling portion 32 are both provided at a plurality of locations. Each coupling portion (31, 32) can adjust its position relative to the coupling target.

In the present embodiment, the vehicle body coupling portion 31 has a first vehicle body coupling portion 31a coupled to the first cross member 43a and a second vehicle body coupling portion 31b coupled to the second cross member 43b. The reinforcement member 30 is coupled to and supported by both the upper first cross member 43a and the lower second cross member 43b. The first cross member 43a is also a hood lock member as a structure member that receives a front portion of the front hood (not illustrated). The reinforcement member 30 has about the same length as each cross member 43a, 43b in the vehicle width direction. In the illustrated example, the first vehicle body coupling portion 31a is provided in an upper portion of the reinforcement member 30 at two locations in a central part in the vehicle width direction, one location on the right side in the vehicle width direction, and one location on the left side in the vehicle width direction. The second vehicle body coupling portion 3 1b is provided below a central part in the vehicle width direction of the reinforcement member 30.

Specifically, the reinforcement member 30 is supported by the first cross member 43a via a first upper bracket 47a and a second upper bracket 47b which are joined to the upper first cross member 43a, and supported by the second cross member 43b via a lower bracket 48 joined to the lower second cross member 43b. The first upper bracket 47a is provided at two locations near the center in the vehicle width direction of the first cross member 43a, and the second upper bracket 47b is provided in both end portions in the vehicle width direction of the first cross member 43a.

The first vehicle body coupling portion 31a of the upper portion of the reinforcement member 30 is coupled to the first cross member 43a by being coupled (fastened) to each of the first upper bracket 47a and the second upper bracket 47b by a coupling tool such as a bolt, and the second vehicle body coupling portion 3 1b below the central part in the vehicle width direction of the reinforcement member 30 is coupled to the second cross member 43b by being locked to the lower bracket 48.

The panel coupling portion 32 is provided at a plurality of locations such as upper and lower portions on the outer side in the vehicle width direction, the upper portion in the vertical direction of the vehicle, and the central part in the vehicle width direction of the reinforcement member 30. Although not particularly limited, in the vehicle body coupling portion 31, the first vehicle body coupling portion 31a coupled to the first cross member 43a is also coupled to the outer panel 10 and functions as the panel coupling portion 32.

The panel coupling portion 32 has a peripheral coupling portion 32a coupled to a predetermined position in a peripheral region 10f (see shaded portion illustrated in Figure 5) surrounding the region 10d3 (i.e., sensor wave passage region 10d3) opposite the sensor main body S1 of the sensor device S in the outer panel 10. The structure of the peripheral coupling portion 32a will be described in detail later.

In the present embodiment, the reinforcement member 30 is divided into a middle reinforcement member 30M to which the sensor device S is attached, and a side reinforcement member 30S coupled to the outer end in the vehicle width direction of the middle reinforcement member 30M. The middle reinforcement member 30M and the side reinforcement member 30S are coupled (fastened) to each other by a coupling tool such as a bolt. That is, the reinforcement member 30 has the left side reinforcement member 30S, the right side reinforcement member 30S, and the middle reinforcement member 30M between the left side reinforcement member 30S and the right side reinforcement member 30S. The reinforcement member 30 is formed by coupling the left and right side reinforcement members 30S to the middle reinforcement member 30M. In other words, the reinforcement member 30 is a reinforcement assembly or a reinforcement body formed by combining a plurality of members.

In relation to the vehicle body (cross member 43), the upper portion of each side reinforcement member 30S is coupled to the second upper bracket 47b, the upper portion of the middle reinforcement member 30M is coupled to the first upper bracket 47a, and a lower portion of the middle reinforcement member 30M is coupled to the lower bracket 48.

Next, the position of the sensor device S, and the shape, the structure, and the like of the middle reinforcement member 30M of the reinforcement member 30 will mainly be described in detail.

With reference to Figures 3 and 4, the sensor device S is attached to the middle reinforcement member 30M of the reinforcement member 30 as described above. Then, in the present embodiment, when attached to the reinforcement member 30, the sensor device S is arranged at a position between the first cross member 43a and the second cross member 43b in the vertical direction of the vehicle.

Specifically, with reference to Figures 3 to 7, the sensor wave passage region 10d3 in the front grille 10d as a part of the outer panel 10 is in a position corresponding to the middle reinforcement member 30M of the reinforcement member 30 in the vehicle width direction, and arranged at a position between the first cross member 43a and the second cross member 43b in the vertical direction of the vehicle. In the present embodiment, the middle reinforcement member 30M has a sensor opening 33 opened so as to be capable of accommodating the sensor main body S1 therein. The sensor device S is attached to the middle reinforcement member 30M from the back via the sensor bracket S2, with the sensor main body S1 of the sensor device S accommodated inside the sensor opening 33. In this state, a predetermined gap is formed between the sensor front surface S1a of the sensor device S and the sensor wave passage region 10d3 of the outer panel 10. Note that the sensor opening 33 is opened in a larger rectangular shape than the outer shape of the sensor main body S1.

### (Middle reinforcement member and vehicle body coupling portion thereof)

In the present embodiment, in the middle reinforcement member 30M, the first vehicle body coupling portion 31a is provided on both sides in the vehicle width direction of the middle reinforcement member 30M at a position separated to one side (upper side in illustrated example) in the vertical direction of the vehicle from the sensor device S, and the second vehicle body coupling portion 3 1b is provided at a position of the middle reinforcement member 30M separated to the other side (lower side in illustrated example) in the vertical direction of the vehicle from the sensor device S. The structures of the first vehicle body coupling portion 31a and the second vehicle body coupling portion 31b will be described in detail later.

In the present embodiment, the middle reinforcement member 30M is formed to be narrowed in the vehicle width direction from one end side (upper end side in illustrated example) at which the first vehicle body coupling portion 31a is provided toward the other end side (lower end side in illustrated example) at which the second vehicle body coupling portion 31b is provided. In the illustrated example, the middle reinforcement member 30M has an inverted trapezoidal outer shape with the upper bottom generally longer than the lower bottom in plan view, and is curved generally along the front grille 10d and the bumper inclined surface portion 10b of the outer panel 10 in side view.

In the present embodiment, each of both side portions of the middle reinforcement member 30M in the vehicle width direction has a first side portion 34 extending at a first degree of inclination relative to a virtual line X extending in the vertical direction through the sensor device S, and a second side portion 35 continuous with the first side portion 34 and extending at a second degree of inclination more moderate than the first degree of inclination relative to the virtual line X (see Figures 6 and 7). In the middle reinforcement member 30M of the illustrated example, the first side portion 34 is inclined from an upper portion of the middle reinforcement member 30M downward toward the virtual line X. Then, the second side portion 35 is continuous with the lower end of the first side portion 34 and positioned on the side of the sensor opening 33, and is inclined downward toward the virtual line X. Then, an interior angle formed by the first side portion 34 and the virtual line X is set larger than an interior angle formed by the second side portion 35 and the virtual line X.

In the present embodiment, a back surface rib 36 extending so as to surround the sensor main body S1 of the sensor device S is formed on the back surface of the reinforcement member 30. In the middle reinforcement member 30M, the back surface rib 36 is formed of an inner vertical rib 36a extending in the vertical direction along the opening edge of the sensor opening 33, and an inner horizontal rib 36b extending in the vehicle width direction along the opening edge of the sensor opening 33. Although not particularly limited, in the illustrated example, a part of one inner vertical rib 36a (left inner vertical rib 36a in Figures 7 and 8) is extended upward from the sensor opening 33 in the vertical direction and is cut out so as to avoid interference with the left flange S24 of the sensor bracket S2. The other inner vertical rib 36a (right inner vertical rib 36a in Figures 7 and 8) is extended upward and downward from the sensor opening 33.

In the illustrated example, other than the back surface rib 36, the back surface of the middle reinforcement member 30M is provided with an outer vertical rib 36c extending along the first side portion 34 and the second side portion 35, and an outer horizontal rib 36d spaced apart from the inner horizontal rib 36b in the vertical direction. The outer vertical rib 36c is provided on the outside in the vehicle width direction of the inner vertical rib 36a, and these components are coupled to each other by the outer horizontal rib 36d and stepped portions to improve rigidity of the middle reinforcement member 30M.

In the present embodiment, the middle reinforcement member 30M has a bulging portion 37 continuous with the opening edge of the sensor opening 33 and bulging toward the second cross member 43b. In the illustrated example, the bulging portion 37 is positioned below the sensor opening 33 and bulges to the vehicle rear. A lower wall 37a of the bulging portion 37 is provided at a lower portion of the middle reinforcement member 30M and faces the lower side.

The upper portion of the middle reinforcement member 30M is overlapped on the back surface 10e of a bumper flange portion forming the upper portion of the bumper inclined surface portion 10b and extending rearward, and is sandwiched between the bumper flange portion and an upper surface of the first upper bracket 47a. The lower portion (lower wall of bulging portion 37) of the middle reinforcement member 30M abuts on an upper wall of the lower bracket 48 and is supported thereon. Moreover, the outer horizontal rib 36d provided on the back of the bulging portion 37 improves the rigidity of the bulging portion 37.

In the illustrated example, the first vehicle body coupling portion 31a is positioned at each of both end portions in the vehicle width direction of the upper portion of the middle reinforcement member 30M, and the second vehicle body coupling portion 31b is positioned at the lower portion of the middle reinforcement member 30M. In the present embodiment, the second vehicle body coupling portion 31b is provided in the bulging portion 37 positioned at the lower portion of the middle reinforcement member 30M. Specifically, the first vehicle body coupling portion 31a is provided on the lower wall 37a of the bulging portion 37. Two vehicle body coupling holes 31a1 are opened in the first vehicle body coupling portion 31a, and a protrusion 31b1 is formed in the second vehicle body coupling portion 31b. The protrusion 31b1 protrudes downward from the lower wall 37a of the bulging portion 37.

In the first vehicle body coupling portion 31a, a clip (not illustrated) is inserted, from the upper side of the outer panel 10, into a clip hole formed in the outer panel 10, one vehicle body coupling hole 31a1 of the reinforcement member 30, and a clip hole 47a1 (see Figure 2) formed in the first upper bracket 47a. As a result, the first vehicle body coupling portion 31a is coupled to the vehicle body (upper cross member 43) via the first upper bracket 47a with the clip. Furthermore, a bolt (not illustrated) is inserted, from the upper side of the outer panel 10, into a bolt hole formed in the outer panel 10, the other vehicle body coupling hole 31a1 of the reinforcement member 30, and a bolt hole 47a2 (see Figure 2) formed in an upper wall of the first upper bracket 47a, and screwed into a weld nut on the back surface of the bolt hole 47a2. As a result, the first vehicle body coupling portion 31a is coupled (fastened) to the vehicle body (upper cross member 43) via the first upper bracket 47a with the bolt. At this time, the first vehicle body coupling portion 31a is also coupled to the outer panel 10, and also functions as the panel coupling portion 32. Each vehicle body coupling hole 31a1 has an opening with a predetermined amount of adjustment play (adjustment margin) to allow fine adjustment of the relative position of the middle reinforcement member 30M and the first upper bracket 47A.

In the second vehicle body coupling portion 3 1b, the protrusion 31b1 of the second vehicle body coupling portion 31b is locked onto a locking hole 48a (see Figures 2, 6, and 7) formed in an upper wall of the lower bracket 48 to be coupled to and supported by the vehicle body (lower cross member 43) via the lower bracket 48. The locking hole 48a is formed with a predetermined amount of adjustment play (adjustment margin) to allow fine adjustment of the relative position of the middle reinforcement member 30M and the lower bracket 48 (vehicle body structure member 40).

### (Panel coupling portion)

In the present embodiment, in the middle reinforcement member 30M, the panel coupling portion 32 is provided in the upper portion of the middle reinforcement member 30M and the central part of the middle reinforcement member 30M. As described earlier, the first vehicle body coupling portion 31a also serves as the panel coupling portion 32 of the upper portion of the middle reinforcement member 30M. The panel coupling portion 32 of the central part of the middle reinforcement member 30M is formed of the peripheral coupling portion 32a described above.

The peripheral coupling portion 32a of the panel coupling portion 32 is coupled to a predetermined position of the peripheral region 10f (see Figures 5 to 7) surrounding the sensor wave passage region 10d3.

In the present embodiment, the peripheral coupling portion 32a has the first peripheral coupling portion 32a1 and the second peripheral coupling portion 32a2 separated from each other in the vehicle width direction, and a third peripheral coupling portion 32a3 provided at a position spaced apart to one side (lower side in illustrated example) in the vertical direction of the vehicle from the first peripheral coupling portion 32a1 and the second peripheral coupling portion 32a2.

In the illustrated example, in the middle reinforcement member 30M, the first peripheral coupling portion 32a1 and the second peripheral coupling portion 32a2 are separated in the vehicle width direction in the vicinity of the opening upper edge of the sensor opening 33. The first peripheral coupling portion 32a1 is provided in the upper right corner of the opening edge of the sensor opening 33 in back view, and the second peripheral coupling portion 32a2 is provided in the upper left corner of the opening edge of the sensor opening 33 in back view. The third peripheral coupling portion 32a3 is provided in the vicinity of the lower edge of the opening edge of the sensor opening 33. A panel coupling hole 32a4 is opened in each peripheral coupling portion (32a1, 32a2, 32a3). Each panel coupling hole 32a4 has an opening with a predetermined amount of adjustment play (adjustment margin) to allow fine adjustment of the relative position of the middle reinforcement member 30M and the outer panel 10 (front grille 10d).

With reference to Figure 5, a boss portion 10g is formed in each position corresponding to each peripheral coupling portion (32a1, 32a2, 32a3) in the peripheral region 10f of the outer panel 10. A screw hole is formed in the boss portion 10g. The upper two boss portions 10g are formed in the upper edge of the front grille 10d, and the lower one boss portion 10g is positioned below the sensor wave passage region 10d3 of the front grille 10d.

With reference to Figures 5 and 6, a first seating surface 10h1 on which the first peripheral coupling portion 32a1 of the middle reinforcement member 30M abuts and a second seating surface 10h2 on which the second peripheral coupling portion 32a2 abuts are formed at the opening upper edge of the bumper opening of the outer panel 10. That is, the outer panel 10 has the first seating surface 10h 1 and the second seating surface 10h2.

With reference to Figures 5 and 8, each of the upper boss portions 10g is inserted into a boss hole 10i formed in the corresponding seating surface (10h1, 10h2) of the opening upper edge of the bumper opening of the outer panel 10.

With reference to Figures 6 and 7, a part of the middle reinforcement member 30M in which the third peripheral coupling portion 32a3 is formed is surrounded by an extended portion of the inner vertical rib 36a, the inner horizontal rib 36b, the outer horizontal rib 36d, and a vertical wall 37b of the bulging portion 37. As a result, the supporting rigidity of the third peripheral coupling portion 32a3 is improved.

With reference to Figures 6 to 9, the first peripheral coupling portion 32a1 is coupled (fastened) to the right corner of the peripheral region 10f that surrounds the sensor wave passage region 10d3 of the outer panel 10 by screwing a bolt (not illustrated) inserted into the panel coupling hole 32a4 from the back surface side of the middle reinforcement member 30M into a screw hole formed in the boss portion 10g of the first seating surface 10h1 in the first peripheral coupling portion 32a1. The second peripheral coupling portion 32a2 is coupled (fastened) to the left corner of the peripheral region 10f surrounding the sensor wave passage region 10d3 by screwing a bolt (not illustrated) inserted into the panel coupling hole 32a4 into a screw hole of the boss portion 10g of the first seating surface 10h1 in the second peripheral coupling portion 32a2. At this time, the boss portion 10g of the front grille 10d is inserted into the boss hole 10i formed in the outer panel 10 from the front surface side (design surface side) of the outer panel 10. The third peripheral coupling portion 32a3 is coupled (fastened) to the lower corner of the peripheral region 10f surrounding the sensor wave passage region 10d3 by screwing a bolt (not illustrated) inserted into the panel coupling hole 32a4 into a screw hole formed in the boss portion 10g in the third peripheral coupling portion 32a3.

### (Positioning portion)

With reference to Figures 5 to 9, in the present embodiment, in the outer panel 10, a positioning portion 10j that determines the position of the reinforcement member 30 (middle reinforcement member 30M) relative to the outer panel 10 is provided for each of the first seating surface 10h1 and the second seating surface 10h2. The positioning portion 10j is formed as a positioning hole (fitting hole) or a positioning projection which is an element that controls movement relative to the middle reinforcement member 30M. Contact between the positioning portion 10j and the control target determines the position relative to the control target in a predetermined direction.

In the present embodiment, the positioning portion 10j has a first panel positioning portion 10j 1 and a second panel positioning portion 10j2. Each panel positioning portion (10j 1, 10j2) is formed as a positioning projection. The first panel positioning portion 10j 1 is positioned on the first seating surface 10h1 of the middle reinforcement member 30M, and the second panel positioning portion 10j2 is positioned on the second seating surface 10h2. In the illustrated example, each panel positioning portion (10j 1, 10j2) is formed as a columnar projection having a plus (+) shaped cross section. The first panel positioning portion 10j 1 fits into a first control hole 38a opened in the first peripheral coupling portion 32a1 of the middle reinforcement member 30M, and the second panel positioning portion 10j2 fits into a second control hole 38b opened in the second peripheral coupling portion 32a2 of the middle reinforcement member 30M. At this time, the peripheral edge surface of the first control hole 38a of the middle reinforcement member 30M abuts on the first seating surface 10h1 of the outer panel 10 and is supported thereon, and the peripheral edge surface of the second control hole 38b of the middle reinforcement member 30M abuts on the second seating surface 10h2 of the outer panel 10 and is supported thereon.

Each control hole (38a, 38b) is opened in a rectangular shape so that it can control relative movement between the middle reinforcement member 30M and the outer panel 10 in the vertical direction and the left-right direction. The adjustment margin of the first control hole 38a in the left-right direction and the vertical direction and the adjustment margin of the second control hole 38b in the vertical direction are set to a minimum. The second control hole 38b is opened in a long-hole shape having a size with a predetermined amount of adjustment play (adjustment margin) to allow fine adjustment of the relative position of the middle reinforcement member 30M and the outer panel 10 mainly in the left-right direction.

### (Sensor fixing point)

In the present embodiment, the fixing point (hereinafter referred to as sensor fixing point as appropriate) of the sensor device S to the reinforcement member 30 is set at a plurality of locations along the opening edge of the sensor opening 33 on the back surface of the middle reinforcement member 30M. In the illustrated example, the sensor fixing point is set at three locations along the opening edge of the sensor opening 33. Specifically, in back view, the middle reinforcement member 30M is provided with, as sensor fixing points, a first sensor fixing point P1 provided on the right second side portion 35 of the middle reinforcement member 30M, a second sensor fixing point P2 provided on the left second side portion 35 of the middle reinforcement member 30M, and a third sensor fixing point P3 provided at the opening upper edge of the sensor opening 33 of the middle reinforcement member 30M. The third sensor fixing point P3 is a fixing point passing through the center in the vehicle width direction of the sensor device S, and is set at a position between the first sensor fixing point P1 and the second sensor fixing point P2 in the vehicle width direction.

In other words, in the present embodiment, some (first sensor fixing point P1 and second sensor fixing point P2) of the fixing points of the sensor device S to the middle reinforcement member 30M are set in the second side portion 35. Then, in the present embodiment, the third sensor fixing point P3 which is the fixing point of the sensor device S to the reinforcement member 30 (middle reinforcement member 30M) at the center in the vehicle width direction is set between the first peripheral coupling portion 32a1 and the second peripheral coupling portion 32a2. That is, the third sensor fixing point P3 is arranged between the first peripheral coupling portion 32a1 and the second peripheral coupling portion 32a2 generally in line with the first peripheral coupling portion 32a1 and the second peripheral coupling portion 32a2.

The first sensor fixing point P1 and the second sensor fixing point P2 are provided in the vicinity of the inner vertical rib 36a, and the third sensor fixing point P3 is provided on the inner horizontal rib 36b.

A sensor support surface 39a on which a sensor bracket S1 (right flange S23, left flange S24) of the sensor device S abuts is formed around the first sensor fixing point P1 and around the second sensor fixing point P2. Each sensor support surface 39a is provided between the inner vertical rib 36a and the outer vertical rib 36c. That is, the first sensor fixing point P1 is provided in a high rigidity part between the right inner vertical rib 36a and the right outer vertical rib 36c, and the second sensor fixing point P2 is provided in a high rigidity part between the left inner vertical rib 36a and the left outer vertical rib 36c.

With reference to Figures 6 and 7, a nut guide groove 39b on which a plate square nut N (see dashed line shown in Figure 7) is attached is formed on the outer panel 10 side (i.e., outside or front side) of each of the first sensor fixing point P1 and the second sensor fixing point P2, and a bolt insertion recess 39c for screwing a bolt into the plate square nut from the inside (i.e., back surface side) of the middle reinforcement member 30M is opened in each sensor support surface 39a. The nut guide groove 39b is formed as a groove having an adjustment margin in the vehicle width direction to allow relative movement between the sensor device S and the middle reinforcement member 30M, and similarly, the bolt insertion recess 39c is formed as a recess (cutout) having an adjustment margin in the vehicle width direction to allow relative movement between the sensor device S and the middle reinforcement member 30M.

In the present embodiment, a bracket positioning projection 39d that fits into a bracket positioning hole S2a opened in the sensor bracket S2 (right flange S23, left flange S24) is formed in the sensor support surface 39a.

A sensor receiving boss portion 39e (see Figure 7) is formed integrally with the inner horizontal rib 36b at the third sensor fixing point P3.

At the first sensor fixing point P1, a bolt (not illustrated) inserted into a flange insertion hole S2b formed in the right flange S23 from the flange back surface side is screwed into the plate square nut N through the bolt insertion recess 39c, whereby the right flange S23 of the sensor device S is coupled (fastened) to the first sensor fixing point P1 of the middle reinforcement member 30M. At the second sensor fixing point P2, a bolt (not illustrated) inserted into a flange insertion hole S2b formed in the left flange S24 from the flange back surface side is screwed into the plate square nut N through the bolt insertion recess 39c, whereby the left flange S24 of the sensor device S is coupled (fastened) to the second sensor fixing point P2 of the middle reinforcement member 30M. At the third sensor fixing point P3, a bolt (not illustrated) inserted into a flange insertion hole S2b formed in the upper flange S22 from the flange back surface side is screwed into a screw hole formed in the sensor receiving boss portion 39e, whereby the upper flange S22 of the sensor device S is coupled (fastened) to the third sensor fixing point P3 of the middle reinforcement member 30M.

In the present embodiment, in the middle reinforcement member 30M, two first vehicle body coupling portions 31a and one second vehicle body coupling portion 31b are provided for the vehicle body coupling portion 31, and the first peripheral coupling portion 32a1, the second peripheral coupling portion 32a2, and the third peripheral coupling portion 32a3 are provided for the panel coupling portion 32. That is, three or more vehicle body coupling portions and panel coupling portions are formed.

With reference to Figure 10, a virtual polygon T2 (inverted triangle in illustrated example) connecting the peripheral coupling portions (32a1, 32a2, 32a3) is formed along a virtual polygon T1 (inverted triangle in illustrated example) connecting the vehicle body coupling portions (31a, 31a, 31b). That is, the peripheral coupling portions (32a1, 32a2, 32a3) are arranged so that the virtual polygon T2 formed of the peripheral coupling portions (32a1, 32a2, 32a3) is formed along the virtual polygon T1. Moreover, the fixing points of the sensor device S to the reinforcement member 30 are set at three or more locations (three locations in illustrated example). A virtual polygon T3 (triangle protruding upward in illustrated example) connecting the fixing points (P1, P2, P3) is generally arranged inside the virtual polygon T1 connecting the vehicle body coupling portions (31a, 31a, 3 1b). With reference to Figure 10, the fixing point (P1, P2, P3) is arranged between two adjacent vehicle body coupling portions (31a-31a, 31a-31b, 31b-31a), or between two adjacent peripheral coupling portions (32a1-32a2, 32a2-32a3, 32a3-32a1).

According to the vehicle structure 1 of the present embodiment, the reinforcement member 30 has the vehicle body coupling portion 31 coupled to the cross member 43 and the panel coupling portion 32 coupled to the outer panel 10. The panel coupling portion 32 has the peripheral coupling portion 32a that is coupled to a predetermined position of the peripheral region 10f surrounding the region 10d3 (sensor wave passage region 10d3) of the outer panel 10 opposite the sensor main body S1 of the sensor device S. That is, the reinforcement member 30 on which the sensor device S is fixed and which reinforces the outer panel 10 is fixed to the peripheral region 10f of the sensor wave passage region 10d3 of the outer panel 10. As a result, the relative position of the outer panel 10 and the sensor device S and the relative position (including relative angle) of the sensor device S and the cross member 43 (vehicle body structure member 40) are both easily adjustable individually. Furthermore, since the reinforcement member 30 is coupled to the peripheral region 10f surrounding the sensor wave passage region 10d3 via the peripheral coupling portion 32a, vibration of the sensor device S is effectively reduced and the sensing (detection) accuracy of the sensor device S is improved.

As described above, the vehicle structure 1 according to the present embodiment is a vehicle structure having a sensor device attachment structure that can improve the sensing (detection) accuracy of a sensor device.

In the present embodiment, the vehicle body coupling portion 31 has the first vehicle body coupling portion 31a coupled to the first cross member 43a and the second vehicle body coupling portion 31b coupled to the second cross member 43b. As a result, the reinforcement member 30 supporting the sensor device S is supported by two cross members, an upper and a lower cross member (43a, 43b). Hence, vibration of the reinforcement member 30 is reduced, and the relative positional relationship (position in vertical direction in particular) between the sensor device S and the vehicle body structure member 40 is maintained. As a result, when the vehicle body vibrates, the sensor device S and the vehicle body structure member 40 are displaced as one unit, so that the relative position and relative angle (vehicle mounting angle) of the sensor device S relative to the vehicle body structure member 40 of the sensor device S are maintained, and positional deviation of the sensor device S from the vehicle body is effectively reduced or prevented.

The sensor device S is arranged at a position between the first cross member 43a and the second cross member 43b in the vertical direction of the vehicle. As a result, the upper portion and the lower portion of the sensor device S are both supported by the vehicle body structure member 40, whereby the supporting rigidity of the sensor device S is increased and vibration and positional deviation of the sensor device S are reduced. Moreover, even when an impact force from outside the vehicle acts on the outer panel 10 and the sensor device S is displaced to the vehicle interior side, the sensor device S is prevented from colliding with the cross member 43 and breaking.

The first vehicle body coupling portion 31a is provided on both sides in the vehicle width direction at a position of the middle reinforcement member 30M spaced apart to one side in the vertical direction of the vehicle from the sensor device S. The second vehicle body coupling portion 31b is provided at a position of the middle reinforcement member 30M spaced apart to the other side in the vertical direction of the vehicle from the sensor device S. As a result, swinging of the middle reinforcement member 30M in the vehicle width direction is reduced, and the sensor device S is more stably supported by the reinforcement member 30.

Then, the middle reinforcement member 30M is formed to be narrowed in the vehicle width direction from one end side (upper end side in illustrated example) at which the first vehicle body coupling portion 31a is provided toward the other end side (lower end side in illustrated example) at which the second vehicle body coupling portion 31b is provided. As a result, air taken in from one side (vehicle front in illustrated example) in the longitudinal direction of the vehicle is less likely to be blocked by the reinforcement member 30.

The middle reinforcement member 30M has the sensor opening 33 opened to accommodate the sensor main body S 1 therein and the bulging portion 37 that is continuous with the opening edge of the sensor opening 33 and bulges toward the second cross member 43b, and the second vehicle body coupling portion 31b is provided in the bulging portion 37 of the middle reinforcement member 30M. As a result, rigidity around the fixing point of the sensor device S to the middle reinforcement member 30M is increased significantly, and stable support of the sensor device S is achieved extremely effectively.

In the present embodiment, both side portions in the vehicle width direction of the middle reinforcement member 30M each has the first side portion 34 extending at a first degree of inclination relative to the virtual line X extending in the vertical direction through the sensor device S, and the second side portion 35 continuous with the first side portion 34 and extending at a second degree of inclination more moderate than the first degree of inclination relative to the virtual line X. Some of the fixing points of the sensor device S to the middle reinforcement member 30M are set in the second side portion 35. As a result, swinging of the middle reinforcement member 30M in the vehicle width direction is reduced and intake blockage by the reinforcement member 30 is reduced, while rigidity around the fixing point of the sensor device S to the middle reinforcement member 30M is increased to more effectively achieve stable support of the sensor device S.

In the present embodiment, the back surface rib 36 extending so as to surround the sensor main body S 1 of the sensor device S is formed on the back surface of the reinforcement member 30. As a result, surface rigidity around the fixing point of the sensor device S to the reinforcement member 30 (middle reinforcement member 30M) is increased, and supporting rigidity of the sensor device S is increased. As a result, positional deviation and vibration of the sensor device S are reduced and the sensing (detection) accuracy of the sensor device S is improved even more.

In the present embodiment, the peripheral coupling portion 32a includes the first peripheral coupling portion 32a1 and the second peripheral coupling portion 32a2 separated from each other in the vehicle width direction, and the third sensor fixing point P3 which is the fixing point of the sensor device S to the reinforcement member 30 (middle reinforcement member 30M) at the center in the vehicle width direction is set between the first peripheral coupling portion 32a1 and the second peripheral coupling portion 32a2. As a result, the third sensor fixing point P3 that defines the center position (e.g., central position) in the vehicle width direction of the sensor device S is arranged between the first peripheral coupling portion 32a1 and the second peripheral coupling portion 32a2 of the panel coupling portion 32. As a result, adjustment (determination of central position) of the center position (central position) in the vehicle width direction of the sensor device S relative to the outer panel 10 is performed easily.

In the present embodiment, in the outer panel 10, the positioning portion 10j that determines the position of the reinforcement member 30 (middle reinforcement member 30M) relative to the outer panel 10 is provided in each of the first seating surface 10h1 and the second seating surface 10h2. As a result, the position of the sensor device S relative to the outer panel 10 is determined more easily.

Moreover, as illustrated in Figure 10, the first sensor fixing point P1 and the second sensor fixing point P2 are both generally provided at a position along a straight line connecting the first vehicle body coupling portion 31a and the second vehicle body coupling portion 31b. Hence, the relative positional relationship of the sensor device S to the vehicle body is maintained easily.

As illustrated in Figure 10, the first peripheral coupling portion 32a1 and the second peripheral coupling portion 32a2 are both generally provided at a position along a straight line connecting the first vehicle body coupling portion 31a and the second vehicle body coupling portion 31b. Hence, positional deviation of the outer panel 10 is reduced.

As illustrated in Figure 10, the third sensor fixing point P3 is arranged between the first peripheral coupling portion 32a1 and the second peripheral coupling portion 32a2. Hence, the relative positional relationship between the front grille 10d (outer panel 10) including the sensor wave passage region 10d3 and the sensor device S is maintained easily.

As illustrated in Figure 10, the virtual polygon T3 connecting the fixing points (P1, P2, P3) is a triangle protruding upward, and the virtual polygon T2 connecting the peripheral coupling portions (32a1, 32a2, 32a3) is an inverted triangle protruding downward. Then, the first sensor fixing point P1 is arranged between the first peripheral coupling portion 32a1 and the third peripheral coupling portion 32a3, the second sensor fixing point P2 is arranged between the second peripheral coupling portion 32a2 and the third peripheral coupling portion 32a3, and the third sensor fixing point P3 is arranged between the first peripheral coupling portion 32a1 and the second peripheral coupling portion 32a2. As a result, the relative positional relationship between the front grille 10d (outer panel 10) including the sensor wave passage region 10d3 and the sensor device S is easily maintained even with a small number of fixing points (P1, P2, P3).

While the embodiment of the present invention has been described above, the present invention is not limited to the above embodiment, but further modifications and changes can be made based on the technical idea of the present invention.

For example, the reinforcement member 30 supporting the sensor device S is supported by upper and lower two cross members (43a, 43b), but the invention is not limited thereto. If the sensing (detection) accuracy by the sensor device S is maintained within the desired sensing (detection) accuracy, the reinforcement member 30 only needs to be supported by one of the first cross member 43a and the second cross member 43b. The configuration (relationship) that the virtual polygon T3 formed of the fixing points (P1, P2, P3) is a triangle and the virtual polygon T2 formed of the peripheral coupling portions (32a1, 32a2, 32a3) is an inverted triangle is applied even when the reinforcement member 30 is supported by any one of the first cross member 43a and the second cross member 43b. Even when the number of fixing points (P1, P2, P3) is small, the relative positional relationship between the front grille 10d (outer panel 10) including the sensor wave passage region 10d3 and the sensor device S is maintained easily.

The outer panel 10 is a front bumper having the front grille 10d, but the invention is not limited thereto. The outer panel 10 only needs to have the peripheral region 10f surrounding the sensor wave passage region 10d3 opposite the sensor main body S1 of the sensor device S, and may be a front bumper that does not have the front grille 10d, for example, may be the front grille 10d alone, or may be a decorative member (e.g., metallic-looking member).

The sensor wave passage region 10d3 of the outer panel 10 is formed integrally with the front grille 10d forming the outer panel 10, but the invention is not limited thereto. The sensor wave passage region 10d3 may be formed as a component separated from the outer panel 10 (front grille 10d). Moreover, the sensor wave passage region 10d3 is formed by using a material with a characteristic that allows electromagnetic waves to pass through and is physically present. However, the invention is not limited to this, and the sensor wave passage region 10d3 may be a through hole penetrating the outer panel 10.

The sensor device S is not limited to a radar using millimeter waves or microwaves, and only needs to be a device that senses the environment outside the vehicle. Hence, the sensor device S may be an ultrasonic sensor that senses the environment outside the vehicle using ultrasonic waves, or may be an imaging device such as a camera that senses the environment outside the vehicle by imaging.

Each bracket (first upper bracket 47a, second upper bracket 47b, and lower bracket 48) is formed separately from the vehicle body structure member 40, but the invention is not limited thereto, and each bracket may be formed integrally with the vehicle body structure member 40 by welding or the like to form a part of the vehicle body structure member 40.

The middle reinforcement member 30M has an inverted trapezoidal outer shape with the upper bottom generally longer than the lower bottom, but the invention is not limited thereto, and the middle reinforcement member 30M may have a trapezoidal outer shape with the upper bottom shorter than the lower bottom, or a triangular outer shape protruding upward. In these cases, for example, the upper and lower positions of the first cross member 43a and the second cross member 43b are switched. Alternatively, the middle reinforcement member 30M may have an inverted triangular outer shape protruding downward.

In the present embodiment, the vehicle structure 1 is applied as a vehicle front structure, but the invention is not limited thereto, and the vehicle structure 1 may be applied as a vehicle rear structure. In this case, the outer panel 10 is a rear bumper or a rear grille, for example.

### [Reference Signs List]

- 1: Vehicle structure
- 10: Outer panel
- 10d3: Sensor wave passage region (region)
- 10e: Back surface
- 10f: Peripheral region
- 10h1: First seating surface
- 10h2: Second seating surface
- 10j: Positioning portion
- 30: Reinforcement member
- 30M: Middle reinforcement member
- 30S: Side reinforcement member
- 31: Vehicle body coupling portion
- 31a: First vehicle body coupling portion
- 31b: Second vehicle body coupling portion
- 32: Panel coupling portion
- 32a: Peripheral coupling portion
- 32a1: First peripheral coupling portion
- 32a2: Second peripheral coupling portion
- 33: Sensor opening
- 34: First side portion
- 35: Second side portion
- 36: Back surface rib
- 37: Bulging portion
- 40: Vehicle body structure member
- 43: Cross member
- 43a: First cross member
- 43b: Second cross member
- P1: First fixing point (fixing point)
- P2: Second fixing point (fixing point)
- P3: Third fixing point (fixing point at center in vehicle width direction)
- S: Sensor device
- S1: Sensor main body
- X: Virtual line

## Claims

1. A vehicle structure including:
a cross member forming a part of a vehicle body structure member of a vehicle and extending in a vehicle width direction;
an outer panel supported by the cross member and forming a design surface outside the vehicle;
a reinforcement member reinforcing the outer panel from a back surface side of the outer panel; and
a sensor device attached to the reinforcement member and sensing an environment outside the vehicle, the vehicle structure **characterized in that**
the reinforcement member includes a vehicle body coupling portion coupled to the cross member and a panel coupling portion coupled to the outer panel, and
the panel coupling portion includes a peripheral coupling portion that is coupled to a predetermined position of a peripheral region surrounding a region of the outer panel opposite a sensor main body of the sensor device.

2. The vehicle structure according to claim 1, wherein
the cross member includes a first cross member and a second cross member separated from each other in a vertical direction of the vehicle, and
the vehicle body coupling portion includes a first vehicle body coupling portion coupled to the first cross member and a second vehicle body coupling portion coupled to the second cross member.

3. The vehicle structure according to claim 2, wherein
the sensor device is arranged at a position between the first cross member and the second cross member in the vertical direction of the vehicle.

4. The vehicle structure according to claim 3, wherein:
the reinforcement member is divided into a middle reinforcement member to which the sensor device is attached, and a side reinforcement member coupled to an outer end in the vehicle width direction of the middle reinforcement member;
the first vehicle body coupling portion is provided on both sides in the vehicle width direction at a position of the middle reinforcement member spaced apart to one side in the vertical direction of the vehicle from the sensor device;
the second vehicle body coupling portion is provided at a position of the middle reinforcement member spaced apart to the other side in the vertical direction of the vehicle from the sensor device; and
the middle reinforcement member is formed to be narrowed in the vehicle width direction from one end side at which the first vehicle body coupling portion is provided toward the other end side at which the second vehicle body coupling portion is provided.

5. The vehicle structure according to claim 4, wherein
the middle reinforcement member includes a sensor opening opened to accommodate the sensor main body therein and a bulging portion that is continuous with an opening edge of the sensor opening and bulges toward the second cross member; and
the second vehicle body coupling portion is provided in the bulging portion.

6. The vehicle structure according to claim 4, wherein
both side portions in the vehicle width direction of the middle reinforcement member each has a first side portion extending at a first degree of inclination relative to a virtual line extending in the vertical direction through the sensor device, and a second side portion continuous with the first side portion and extending at a second degree of inclination more moderate than the first degree of inclination relative to the virtual line, and
some of fixing points of the sensor device to the middle reinforcement member are set in the second side portion.

7. The vehicle structure according to any one of claims 1 to 6, wherein
a back surface rib extending so as to surround the sensor main body of the sensor device is formed on a back surface of the reinforcement member.

8. The vehicle structure according to any one of claims 1 to 6, wherein
the peripheral coupling portion includes a first peripheral coupling portion and a second peripheral coupling portion separated from each other in the vehicle width direction, and
a fixing point of the sensor device to the reinforcement member at the center in the vehicle width direction is set between the first peripheral coupling portion and the second peripheral coupling portion.

9. The vehicle structure according to claim 8, wherein
the outer panel includes a first seating surface on which the first peripheral coupling portion abuts and a second seating surface on which the second peripheral coupling portion abuts, a positioning portion determining a position of the reinforcement member relative to the outer panel being provided in each of the first seating surface and the second seating surface.
